# EUROPEAN PATENT APPLICATION

(11) **EP 2 367 106 A1**
(43) Date of publication of application: **21.09.2011**
(21) Application number: 10250500.5
(22) Date of filing: 18.03.2010
(51) Int. Cl.: G06F 9/445

(54) **Data migration tool**

(71) Applicant: British Telecommunications public limited company, London EC1A 7AJ (GB)
(72) Inventor: The designation of the inventor has not yet been filed
(74) Representative: Lidbetter, Timothy Guy Edwin

(57) **Abstract**

A process for the migration of data from the user interface of a first device to the user interface of a second device, the method comprising the steps of
interrogating the first device,
retrieving a first dataset from the first device, the first dataset being in a first format,
extracting variable data from the first dataset,
interrogating the second device,
retrieving a second dataset from the second device, the second dataset being in a second format,
extracting variable data from the second dataset,
modifying the variable data in the second dataset to correspond to the variable data retrieved from the first data set,
returning the modified second dataset to the second device, in the second format but with the variable data modified to correspond to that of the device,
wherein the first and second formats are graphical user interfaces specific to the first and second devices from which they were read and within which the variable data is coded.

## Description

This invention relates to the migration of data from a device with a customisable user interface to another device having a similar fundamental function to the first device and having its own customisable user interface.

It is a common occurrence for communications or other devices to be replaced by newer versions, so that the user can take advantage of new features or capabilities, or because the old device is not compatible with new services or because maintenance of the product is no longer supported by the supplier. This upgrade may be initiated by the user, or it may be provided by a service provider as part of a service upgrade.

In particular, Internet access to a home or business application is typically provided by a router (or "hub") which connects one or more user terminals to each other and to the telecommunications network. The user terminals may be general-purpose computers or dedicated devices such as internet-connected digital television receivers. The user terminals may be connected to the hub by Ethernet, wireless, or other connections. A service provider may wish to supply an improved router as part of a service upgrade for example, as a telecommunications operator converts from ADSL (asymmetric digital subscriber loop) broadband to VDSL (very high bit-rate digital subscriber loop) services provided over fibre-to-the-cabinet (FTTC) or fibre-to-the-premises (FTTP), it is appropriate to provide the customer with compatible equipment.

Most devices are configurable in use, either by the user or pre-set by the manufacturer or distributor. When a device is to be replaced, it therefore has a number of settings which the user may desire to be available on the new device as part of the replacement activity. These settings may concern the user interface itself, or they may be configurations necessary to the correct operation of the user device or its connected terminals. For example, if wireless connections are used, the new router must be able to communicate securely with the same user devices as did the old router, and must therefore be identifiable by those user devices. The settings may include such elements as wireless access codes, application settings, connection authentication codes, etc.

Most such devices provide a graphical user interface (GUI) readable by a human operator, using which the user can read and modify the user settings. In the absence of a display and user input device (mouse, keyboard etc) on the router device itself, a user terminal connected to the router device is commonly used as a peripheral device to effect these settings.

Such a graphical user interface would allow the settings on the new device to be configured manually by the customer, but to do so would require the provision of detailed instructions. Alternatively, if the new device is to be installed by a technician, he may have the necessary skills to perform such a manual configuration. However, this would require him to have a detailed understanding of all the old, legacy, routers which he might be required to replace. It may also be difficult to test that all the necessary changes have been made, for example if a portable user terminal that is to co-operate with the router is not present at the time the new router is installed. In particular, there is no standard interface for interrogating devices (routers) for their existing set-ups. GUIs change frequently with system upgrades which often happen automatically and without the user's knowledge. Typically, the interfaces for the old and new routers will be different, making it difficult to migrate data directly from one to the other.

The conventional way of transferring the settings is for the user or technician to read them from the screen and copy them manually into the new device. Such a process is prone to human error from misreading or miskeying.

It is therefore desirable to develop a process for automatically interrogating a first device for its configuration details, and then to configure a second device according to those details.

As stated above, most such devices can be readily interrogated by a human operator using a graphical user interface (GUI) readable by a human operator. However, the automatic extraction of data from an output intended for a GUI, and conversion to machine-readable form such that it may be replicated accurately, is more difficult. This is because of the wide range of existing devices available, and the number and volume of software upgrades to which such devices may have been subjected, which may have a large effect on the digital formulation of the display data in the GUI. As well as general upgrades, individual modifications may have been made to accommodate the user's particular set-up. Thus the settings to be identified for transfer to the new device could include elements of the GUI which is to be used to identify them.

The present invention seeks to overcome these difficulties, by providing a process for the migration of data from the user interface of a first device to the user interface of a second device, the method comprising the steps of
interrogating the first device,
retrieving a first dataset from the first device, the first dataset being in a first format,
extracting variable data from the first dataset,
interrogating the second device,
retrieving a second dataset from the second device, the second dataset being in a second format,
extracting variable data from the second dataset,
modifying the variable data in the second dataset to correspond to the variable data retrieved from the first data set,
returning the modified second dataset to the second device, in the second format but with the variable data modified to correspond to that of the device,
wherein the first and second formats are graphical user interfaces specific to the first and second devices from which they were read and within which the variable data is coded.

In the preferred arrangement, the process is controlled by a third device, such as another computer, configured to interrogate the first and second devices to retrieve the graphical user interface data. The third device may record one or both of the first and second datasets. The user may be given the facility to alter the modifications to the settings before return to the second device, for example by setting one or more of the data items to a default setting.

The invention also extends to a data migration device for transferring data from the user interface of a first device to the user interface of a second computer device, the data migration device comprising:
means for interrogating the first and second devices,
means for retrieving respective first and second datasets from the first and second device, the first and second dataset being in respective first and second formats,
means for extracting variable data from the first and second datasets,
means for modifying the variable data retrieved from the second dataset to correspond to the variable data retrieved from the first data set,
means for returning the modified second dataset to the second device, in the second format but with the variable data modified to correspond to that of the device,
wherein the first and second formats are graphical user interfaces specific to the first and second devices from which they were read and within which the variable data is coded.

It is envisaged that the invention will be embodied as an application running on a computer. In the preferred embodiment the computer on which the application is to be run is separate from both the first and second devices, and extracts data from the first device to write to the second device so that the customer settings in the first device can be transferred to the second device without special modification to either the first device or the second device.

More specifically, the invention makes use of the browser on the technician's computer to extract the settings on one device and copy them to another device. The technician's computer uses the data but, not the graphics, of the html pages generated by the two devices.

The invention can be implemented by adapting existing html codes to a new purpose, namely to provide new instructions or access data not offered by the GUI installed on the device. The migrator emulates a browser, and the devices to and from which data is to be migrated see it as such. This allows the migrator to retrieve web pages from the devices, and adapt to whatever html javascript data it gets. It then returns responses which inject extra code to draw out further data from the device with which it is operating, additional to that delivered by the standard html page for that device's GUI.

The application can thus be run on a portable computer to be taken to the installation location by a technician when he installs the second device to replace the first. This allows the technician to upgrade the existing customer's equipment, for example from non-FTTC hub to FTTC hub, by importing the settings of the older, non-compatible hub into the new hub.

In preferred arrangements, the process detects any settings which have been changed from factory default, and generates a report of such settings. This allows the setting to be applied again at a later date, should it be necessary to re-install the second device, or to provide a replacement for it.

In the preferred embodiment the process overrides any default settings on the second device. However, the possibility may be provided to revert to the default value for one or more of these settings.

An embodiment of this invention will now be described, with reference to the drawings, in which:
Figure 1 is a schematic diagram showing the equipment which co-operates in the performance of the invention.
Figure 2 is a diagram of the principal functional elements which co-operate to perform the invention
Figure 3 is a Flow Diagram illustrating the process of the invention
Figure 4 is a sequence diagram illustrating the data exchanges that take place between the equipments depicted in Figure 1 in order to retrieve data from the first device 9.
Figure 5 is a sequence diagram illustrating the data exchanges that take place between the equipment depicted in Figure 1 in order to download data to the second device 9.

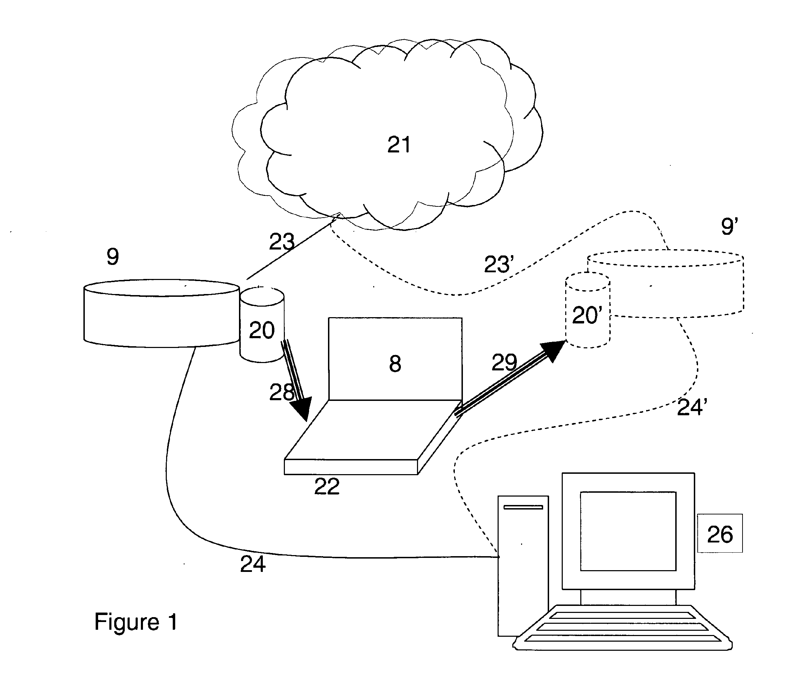

Figure 1 depicts a simple private network initially controlled through a first router 9. The router 9 has, until the changeover process to be described, was
connected to a public data network 21 such as the Internet through a network connection 23, which may be wired, optical or wireless provided access to the Internet 21 for one or more user terminals 26, through a local network 24 which again may use wired or wireless connections.

To initiate the process the router 9 is powered on.

In order to operate the local network 24, the router 9 may have a number of settings established, covering such elements as wireless access codes, application settings, and connection authentication codes to ensure that authorized terminals 26, and only those terminals, can connect to it. The requirements for such settings will depend on a number of factors, for example firewall settings, limited access for certain users (for example to prevent children accessing so-called "adult" websites), and access settings for networks to which unauthorized users might otherwise have access, for example wireless networks or fixed termination points to which visitors (for example, to business premises) might have access. These settings are maintained in a store 20 and are typically stored as a set of html browser pages, which allow a user to access them through a terminal 26 so that they can be used as required for example when adjusting firewall protection settings, adding a terminal to the network 24, or for troubleshooting purposes. However, some of the settings can be adjusted without the user's active intervention, for instance during automatic manufacturer upgrades to the firmware of the device which may include changes to the firewall settings and virus protection which are downloaded from the Internet 21 as they become available.

The service provider operating the network connection 23 may wish to upgrade the services offered to the user, and this may require the provision of an improved router 9', through which the user terminal 26 can connect to the Internet 21 by way of connections 23', 24'. (Although depicted in Figure 1 as new connections, these connections 23', 24' may make use of the existing cabling on one or both sides of the new router 9').

When the new router 9' is to be installed, it is desirable that both the network 21 and user terminals 26 interface with it, as far as is possible, in the same way as did the old router 9. It is therefore desirable that the settings stored in the memory 20 of the old router be transferred to the corresponding memory 20' in the new router 9'. This is not a straightforward matter of copying the html browser pages across as typically the settings required, the formats of the browser pages, and the architectures of the databases 20, 20' will not be the same for both routers 9, 9'. Some of the settings may not even be presented to the user in the standard browser pages stored for display to the user, but may need to be retrieved for copying across to the new browser.

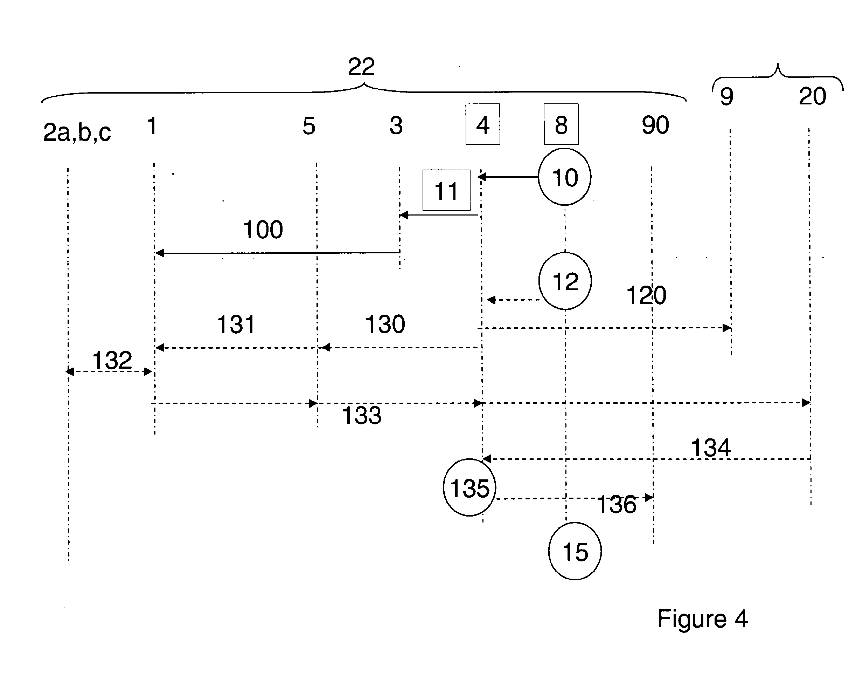

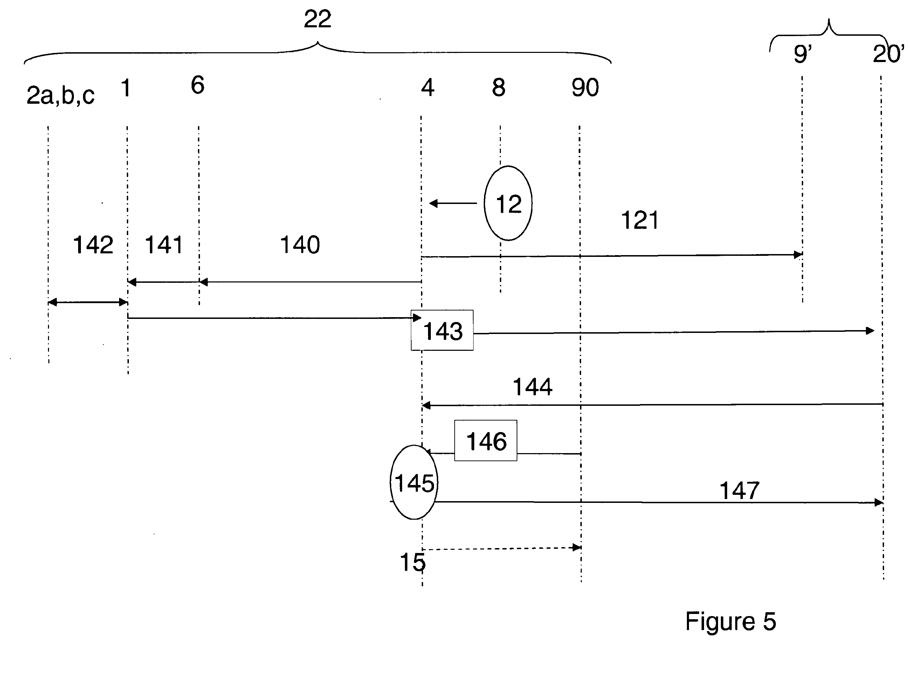

The present invention allows the data to be transferred by means of a third user device, typically a portable computer 22 operated by a technician who is to install the new router 9'. This computer accesses the old router, by establishing itself temporarily as a part of the network 24. The method of connection will typically be a physical connection such as wired Ethernet; a wireless connection is also possible but may require the customer's password and other details to be provided in order to allow access. The technician then uses the process according to the invention, which will be described in detail later, to extract any settings data required. It does this by using a web browser to request the html pages stored in the memory 20 and extract the required data (setting) from them. The browser normally stores these pages in a format with the necessary fields, to be populated with the necessary settings and customizable options when a user initiates a changeThe technician's computer 22 may also generate revised requests for other pages, having fields for additional data not forming part of the standard pages stored in the memory 20 (This process will be described in more detail with reference to Figures 4 and 5).

The data acquisition is therefore a "pull" from the store 20.

The data may be used to generate a report to be stored in the memory of or printed from the technician's computer 22, but the principal purpose of the data acquisition is to transfer the settings to the memory 20' of the new router 9'.

The data is stored on the technician's computer 22 whilst the old router 9 is disconnected from the technician's computer and the new router 9' is connected. The data need only be stored as long as the browser window (the software application) remains open on the technician's computer 22.

A process similar to that used to extract the data from the first router 9 is used to deliver it to the second router 9', extracting the relevant html browser pages from the store 20'. The browser pages will, in general, be in a different format to those in the old router. However, the invention extracts only the html data, from the old router, and not the presentational features of the GUI.

As the second router 9' is a new router, its settings will, in general, be the default settings provided when the device was manufactured. These need to be changed to mirror the settings in the old router 9. The technician's computer 22 over-writes those fields that require it (or all of them) and returns the revised browser pages with the new settings.

This data transfer is a "push" from the technican's computer 22 to the new router 9'.

The default condition would be to copy all the settings across without adjustment, but the technician has access to the settings through the user interface 8 and can, if required, adjust them before forwarding to the second router 9' (e.g. by maintaining one of the factory settings), to take account of any changed conditions associated with the installation of the router 9'. For example, if the router is being installed as part of a conversion from copper wire access 23 to fibre access 23', this may affect the maximum speed of the connection, and the modem software on the network side. Similarly if the new router is a wireless router, replacing one without that capability, wireless access control needs to be established on the customer side 24'.

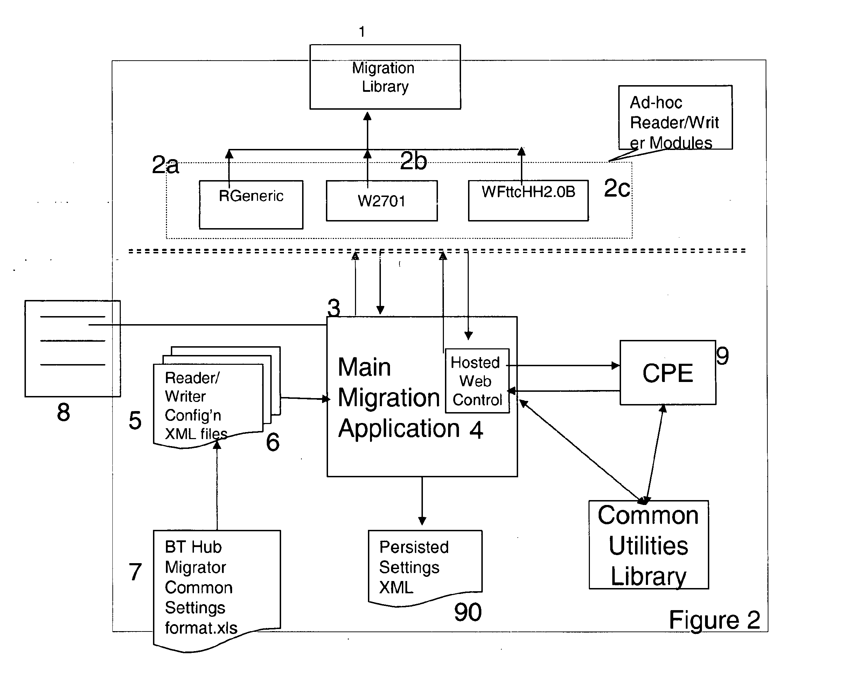

Figure 2 is a High Level Architecture diagram of the principal functional elements which co-operate to perform the invention. It will be understood that these functional elements can be embodied as software running on a programmable computer as an application within a larger software package, or indeed as an application for a device such as a Smartphone, mobile telephone or games console..

As shown in Figure 2, the invention is run on a computer which co-operates with a first device 9 (typically a router or hub) to extract data therefrom, so that the data can subsequently be transferred to a second device (not separately depicted). Loaded onto the computer are a number of functional elements 1, 2a, 2b, 2c, 3, 4, 5, 6, 7.

The necessary programming functions are stored in a Migration Library 1, which is a static library containing program data such as generic classes, common utilities and web control event management functionality. It also contains the data structures and algorithms used by all Reader and Writer modules, and some events which are triggered in response to the completion of certain operations. This program data can be accessed from the library 1 by reader and writer modules 2a, 2b, 2c. The program data in the migration library 1 is used by the reader and writer modules to read and write the settings, by implementing an event synch (a programme that responds in a predetermined way to an input having specified characteristics) to track events in the browser interface indicative of a setting having been altered from its manufactured default state.

The Reader/Writer Modules 2a, 2b, 2c are dynamic link libraries (DLL's) which contain the functionality of reading and writing settings and use the functionality of the Migration Library. The individual modules 2a, 2b, 2c are configured to operate with different generic types of device, but it will be understood that because of updates, previous reconfigurations and other changes there will be differences between individual specimens of any given generic type. The modules 2a, 2b, 2c may also extend the functionality of the migration library 1 to add specialized functions specific to the firmware versions used by individual devices, and which cannot be achieved using the default methods provided by the main migration library 1.

The DLL's 2a, 2b, 2c interface, via the main application 3, with the first device 9 which is to be migrated. The main application 3 can only use the functionality of the Migration Library 1 through the DLLs 2a, 2b, 2c. The settings include application programming interfaces (APIs) for initiation of the migration process, and the Read and Write Settings. An authentication API may also be provided if the user device (router) 9 for which the DLL is written, requires authentication.

The DLLs allow links to be made between the various pages between which the required data is split.

The Reader and Writer modules 2a, 2b, 2c are independent of each other, but have some settings in common. Reader modules have to convert the values which have been read from the first device into a common format, and writer modules have to read the common format values and convert them to the correct format for the target (second) device and then write these settings.

The Main Migration Application 3 is the application which is visible to the operator through a user interface 8, to show the progress of the process and interact with any interventions the operator may need to perform. It is a customized web browser and the user interface 8 is implemented as HTML pages. This main application 3 has application programming interfaces (API's) which are used to send the read/write commands to the Reader/Writer Modules 2a, 2b, 2c.

The main migration application 3 also hosts a Web Browser control 4, allowing the main migration application 3 to act as a bridge between the Migration Library 1 and the web browser control 30. This dialog is invisible to the operator. The migration application 3 is a customized internet web browser, with the user interface being implemented using HTML pages. In the hosted web browser control 4, pages are loaded from the device 9 with which the migration application is currently working, together with read or write settings of the device 9, so that it can read the settings of the first device, and then write the settings to the second device.

In order to do this, a number of settings 5, 6, 7 are stored for retrieval by the web control function 4. A "ReadConfiguration" function 5 contains information about the settings that have to beread from a first device 9, and how to read them. A "WriteConfiguration" function 6 has information about the settings that are required by a second device, and how to write those settings. A number of individual Reader Configuration files 5 and Writer Configuration files 6 are provided, each of which contains the configuration of all the settings for a given Reader or Writer module, and defines all the settings which Reader/Writer Module will need to read or write. It specifies which method is used for reading/writing the setting, for example "GenericScript", "GenericCPP" or "Ad-hoc".

It is understood that a technician is likely to encounter more variety in the old (first) devices than in the new (second) ones, but there may nevertheless be some variation in the second devices, for example there may be different hub/router types configured for home and a business uses.

A further Common Settings Format file 7 defines the values and formats of any settings supported by the migration tool which are invariant between the various types of user device 9 supported by the process. The file defines their names, values and in which sections each setting is used. All Reader and Writer Modules have to comply with this settings format, so that the Reader modules 5 and Writer modules 6 can be decoupled - that is to say, any writer module can be used with any reader module, depending on the types of devices from and to which the settings are to be migrated.

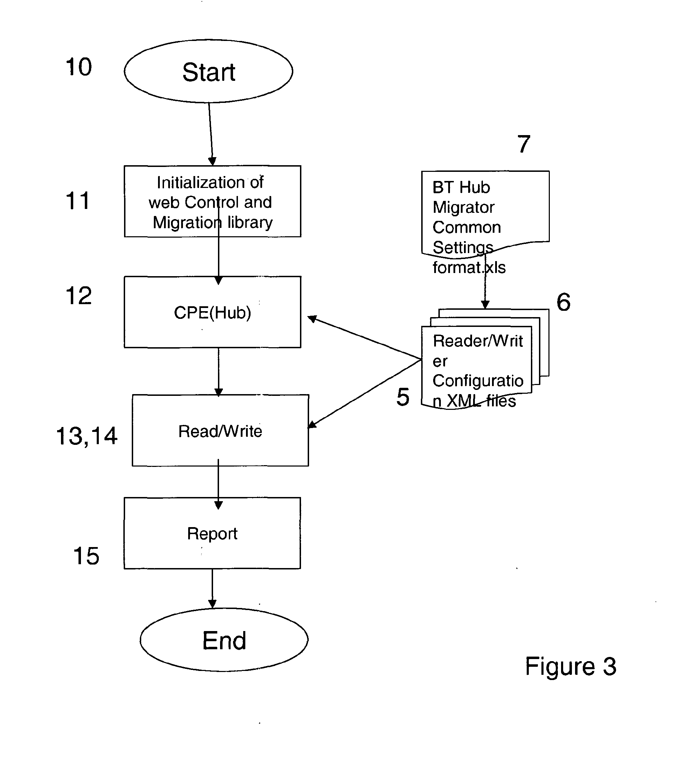

Figure 3 is a Flow Diagram illustrating the main steps in the process according to the invention. Figures 4 and 5 are sequence diagrams showing this process in further detail, Figure 4 showing the process of initialisation and retrieval of data from the first device 9, and Figure 5 showing the downloading of data to the second device 9', and the maintenance of a record on the computer 22 which mediates the process.

Following initial activation 10 of the migration process by the operator of the computer 22, the process begins with an initialization step 11. (Figures 3, 4). In this step the web control application 4 causes the Main Application 3 to pass an interface pointer 100 to the Migration Library 1, so that the Migration library 1 can directly interact with the Web Browser control 4. This configuration allows the Migration Library 1 to be decoupled from the Web Browser control 3, so that other applications hosted elsewhere can also use Web Browser Control interface pointers to access the Migration Library 1.

The next step is device authentication 12. Many devices of the type from which settings are to be copied are subject to control by user-specific credentials. This is done, particularly for wireless hubs, or for wired connections in places to which the public have access, to ensure that only authorised user terminals can connect to the hub (and therefore to each other). The customer provides these credentials to the technician to allow his computer terminal to connect (step 120) to the devices 9, 9' from, and to, which configuration data is to be migrated. The hosted Web Browser control application 4 uses these credentials to authenticate itself to the device 101.

Some devices do not require authentication for reading/writing operations, but for consistency of operation it is convenient for the process described above to obtain the authentication data initially, whether or not it is fact going to be needed later in the process.

The Reader/Writer Modules 2a, 2b, 2c are rules for the migration library 1 to follow. They are organised in sections and each section has specified number of steps e.g. wireless section with n steps (SSID, wireless key ...etc). Under instruction (130) from the web control processor 4, the migration library 1 passes the settings, one section at a time, through these Reader/Writer Modules 2a, 2b, 2c using the application programming interfaces (API) of the main application processor 3. The data files are retrieved in the form of web pages from the first device 9 (step 133, 134) and the retrieved pages (step 135) are parsed to identify the data in the html or other coding within the outputs, and generate outputs 136 incorporating this data, for subsequent writing to the second device, as will be described with reference to Figure 5.

The read operation 5, having first identified the format in which information is displayed in the GUI used by the device, can also use that format to generate revised HTML pages requiring data not forming part of the standard GUI output for that device, and the device will respond with the required data.

The original purpose of the html pages retrieved from the first device 9 is to allow the settings of that same device to be amended. However, the present invention makes use of this data for a different purpose, namely to generate settings for the second device 9'. In order to do this the data retrieved from the first device is copied (135) into the memory 90 of the technician's computer 22 .

The process is then repeated by connecting the technician's computer 22 to the second device 9'. The steps 120, 130-136 are now repeated (121, 140-146) with the new device 9', with some variations as will be discussed because the data retrieved is now to be overwritten by the settings stored in the memory 90 of the technician's computer 22.

After authentication 121 (which may only require use of the default or factory password settings, if user-specific passwords have not already been set before this migration process) the authentication process is performed.

If the second device 9' is a new device, the html pages of the GUI associated with the second device will present the default settings for that device: otherwise the settings will be set to however the previous user left them. The technician's computer downloads the html pages relating to the initial settings of the second device 9' (step 143, 144) in order to parse them (step 145) and so identify the required format, and then retrieves from the store 90 the settings previously copied from the first device 9 (step 146). This data is used to update the data in the html pages retrieved from the second device 9', which is then transmitted back to that device (step 147).

In addition to being written to the second device (step 147), the data retrieved from the Reader/Writer modules 6 is compiled into a report (15) which can be stored on the technician's computer running the migration, or maintained on a memory device to be retained by the customer, for example on his own computer 2;. This report can be useful if subsequent troubleshooting is required, for example if the settings are subsequently lost from the second device. It will be noted that the format of the settings in the report 15 will differ from that in the report 136, which records the settings retrieved from the first device 9.

Although the invention has been described with reference to migration from one router to another, the invention is applicable in any circumstance in which settings need to be transferred between devices. One such application would be for the transfer of settings to a new user device such as a smartphone, replacing one which is lost or damaged, using settings store in a device such as a computer which has been maintained in synchronism with the old device.

## Claims

1. A process for the migration of data from the user interface of a first device to the user interface of a second device, the method comprising the steps of
interrogating the first device,
retrieving a first dataset from the first device, the first dataset being in a first format,
extracting variable data from the first dataset,
interrogating the second device,
retrieving a second dataset from the second device, the second dataset being in a second format,
extracting variable data from the second dataset,
modifying the variable data in the second dataset to correspond to the variable data retrieved from the first data set,
returning the modified second dataset to the second device, in the second format but with the variable data modified to correspond to that of the device,
wherein the first and second formats are graphical user interfaces specific to the first and second devices from which they were read and within which the variable data is coded.

2. A process according to claim 1, the process being controlled by a third device configured to interrogate the first and second devices to retrieve the graphical user interface data.

3. A process according to claim 2, wherein one or both of the first and second datasets are recorded by the third device.

4. A process according to claim 1 or claim 2, wherein the modifications to the variable data may be altered before return to the second device.

5. A process according to any preceding claim, in which following retrieval of a dataset from a respective device in a respective format, the format is modified and returned to the device such that the device delivers settings other than those forming part of the original output.

6. A data migration device for transferring data from the user interface of a first device to the user interface of a second computer device, the data migration device comprising:
means for interrogating the first and second devices,
means for retrieving respective first and second datasets from the first and second device, the first and second dataset being in respective first and second formats,
means for extracting variable data from the first and second datasets, means for modifying the variable data retrieved from the second dataset to correspond to the variable data retrieved from the first data set,
means for returning the modified second dataset to the second device, in the second format but with the variable data modified to correspond to that of the device,
wherein the first and second formats are graphical user interfaces specific to the first and second devices from which they were read and within which the variable data is coded.

7. A data migration device according to claim 6, further having means to record one or both of the first and second datasets are recorded by the third device.

8. A data migration device according to claim 6 or claim 7, having user input means to alter the data to be returned to the second device from correspondence with the data retrieved from the first device.

9. A data migration device according to any of claims 6, 7 or 8, having means for modifying the format in which a dataset is retrieved from a device, and means for returning the modified format to the device such that the device delivers data relating to settings other than those forming part of the original output.
